(19) Europäisches Patentamt
European Patent Office
Office européen des brevets

(11) **EP 4 154 789 A1**

(12) **EUROPEAN PATENT APPLICATION**
published in accordance with Art. 153(4) EPC

(43) Date of publication:
**29.03.2023 Bulletin 2023/13**

(21) Application number: **21838334.7**

(22) Date of filing: **11.06.2021**

(51) International Patent Classification (IPC):
**A47L 11/24** $^{(2006.01)}$      **A47L 11/28** $^{(2006.01)}$
**A47L 11/40** $^{(2006.01)}$

(52) Cooperative Patent Classification (CPC):
**A47L 11/24; A47L 11/282; A47L 11/4008;**
**A47L 11/4011;** A47L 2201/06

(86) International application number:
**PCT/CN2021/099637**

(87) International publication number:
**WO 2022/007590 (13.01.2022 Gazette 2022/02)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **07.07.2020   CN 202010646995**

(71) Applicant: **Dreame Innovation Technology**
**(Suzhou) Co., Ltd.**
**Suzhou, Jiangsu 215104 (CN)**

(72) Inventor: **WANG, Shengle**
**Suzhou, Jiangsu 215104 (CN)**

(74) Representative: **dompatent von Kreisler Selting**
**Werner -**
**Partnerschaft von Patent- und Rechtsanwälten**
**mbB**
**Deichmannhaus am Dom**
**Bahnhofsvorplatz 1**
**50667 Köln (DE)**

(54) **METHOD AND APPARATUS FOR DETERMINING DIRT LEVEL OF CLEANING MECHANISM, AND STORAGE MEDIUM**

(57)      A method, a device and a storage medium for determining a degree of contamination of a cleaning element are disclosed. The method includes: obtaining a first characteristic parameter of a target location in a working area collected by a sensing assembly; obtaining a second characteristic parameter of the target location collected by the sensing assembly; determining a degree of contamination of the target location; and determining the degree of contamination of the cleaning element. The present application can solve the problem of waste of cleaning resources or poor cleaning effect of cleaning device when cleaning the cleaning element based on a fixed cleaning cycle. Since the degree of contamination of the cleaning element can be determined, the present application can determine whether the cleaning element needs to be cleaned, thereby improving the accuracy of determining the cleaning timing of the cleaning element.

obtaining a first characteristic parameter of a target location in a working area collected by the sensing assembly, the first characteristic parameter being a characteristic parameter collected by the sensing assembly before cleaning the target location; — 201

obtaining a second characteristic parameter of the target location collected by the sensing assembly, after the cleaning mechanism is controlled to clean the target location; — 202

determining a degree of contamination of the target location based on a difference between the first characteristic parameter and the second characteristic parameter; — 203

determining the degree of contamination of the cleaning mechanism based on the degree of contamination of the target location; — 204

FIG. 2

EP 4 154 789 A1

## Description

### TECHNICAL FIELD

The present application relates to a method, a device and a storage medium for determining a degree of contamination of a cleaning element, which belongs to a field of computer technology.

### BACKGROUND

A cleaning device (such as a sweeping robot, a mopping robot, etc.) is a kind of smart household appliance, which can automatically complete the ground cleaning work in a room by virtue of a certain artificial intelligence. In an existing cleaning device, the mopping function is realized by setting a rag at the bottom of the device. When the rag is dirty, it will cause secondary pollution to the ground in the subsequent ground cleaning process.

In order to prevent the secondary pollution to the ground, the traditional cleaning device cleans the cleaning element every fixed cleaning cycle.

However, in a fixed cleaning cycle, the degree of contamination of the cleaning element may not be serious. At this time, cleaning the cleaning element will waste cleaning resources. Or, when the cleaning cycle has not yet reached, the degree of contamination of the cleaning element may have caused secondary pollution to the ground. At this time, the cleaning effect of the cleaning device is not good.

### SUMMARY

The present application provides a method, a device and a storage medium for determining a degree of contamination of a cleaning element, which can solve the problem of wasting cleaning resources or poor cleaning effects of cleaning device when cleaning the cleaning element based on a fixed cleaning cycle. The present application provides following technical solutions.

In a first aspect, a method for determining a degree of contamination of a cleaning element is provided. The method is used in a cleaning device. The cleaning device includes the cleaning element and a sensing assembly. The sensing assembly is used to collect a characteristic parameter in a sensing range. The characteristic parameter is a parameter of a reflection signal of a specified signal collected after the sensing assembly emits the specified signal. The method includes steps of:

> obtaining a first characteristic parameter of a target location in a working area collected by the sensing assembly, the first characteristic parameter being a characteristic parameter collected by the sensing assembly before cleaning the target location;
> obtaining a second characteristic parameter of the target location collected by the sensing assembly, after the cleaning element is controlled to clean the target location;
> determining a degree of contamination of the target location based on a difference between the first characteristic parameter and the second characteristic parameter; and
> determining the degree of contamination of the cleaning element based on the degree of contamination of the target location.

Optionally, the sensing assembly includes a reflective light sensing assembly, and the characteristic parameter includes a light intensity parameter of a reflected light signal collected by the reflective light sensing assembly.

Determining the degree of contamination of the cleaning element based on the degree of contamination of the target location, includes:

accumulating degrees of contamination of the target location determined at each working time within a preset time period, so as to obtain the degree of contamination of the cleaning element.

Optionally, after determining the degree of contamination of the cleaning element based on the degree of contamination of the target location, the method further includes:

when the degree of contamination of the cleaning element reaches a contamination threshold, a first cleaning working mode is activated to clean the cleaning element.

Optionally, the first cleaning working mode includes:

> moving to a cleaning position and starting the cleaning element at the cleaning position to clean the cleaning element; or
> outputting a cleaning prompt to an user to prompt the user to clean the cleaning element.

Optionally, after determining the degree of contamination of the cleaning element based on the degree of contamination of the target location, the method further includes:
activating a second cleaning working mode according to the degree of contamination to clean the cleaning element, when a current working time reaches a preset working time.

Optionally, activating the second cleaning working mode according to the degree of contamination, includes:

determining a cleaning time according to the degree of contamination;
moving to a cleaning position; and
starting the cleaning element at the cleaning position to clean the cleaning element; and wherein the cleaning time is in a positive correlation with the degree of contamination;
or,
determining an output mode of a cleaning prompt according to the degree of contamination; and
outputting the cleaning prompt according to the output mode so as to prompt a user to clean the cleaning element.

Optionally, the sensing assembly includes a first sensor and a second sensor; in a traveling direction of the cleaning device, the first sensor is installed at a front end of the second sensor; a mechanism with a cleaning function provided between the first sensor and the second sensor only includes the cleaning element; and
wherein the first sensor is used to collect the first characteristic parameter, and the second sensor is used to collect the second characteristic parameter.

Optionally, obtaining the second characteristic parameter of the target location collected by the sensing assembly, after the cleaning element is controlled to clean the target location, includes:

obtaining an installation distance between the first sensor and the second sensor;
obtaining a moving speed of the cleaning device;
determining a moving time based on the installation distance and the moving speed, the moving time referring to, for a same target location, a predicted time of the cleaning device starting from a position vertically projected by the first sensor as the target location to a position vertically projected by the second sensor as the target location; and
obtaining the second characteristic parameter collected by the second sensor when a time after collecting the first characteristic parameter is the moving time.

In a second aspect, a device for determining a degree of contamination of a cleaning element is provided. The device is used in a cleaning device. The cleaning device includes the cleaning element and a sensing assembly. The sensing assembly is used to collect characteristic a parameter in a sensing range. The characteristic parameter is a parameter of a reflection signal of a specified signal collected after the sensing assembly emits the specified signal. The device includes:

an obtaining module, used to obtain a first characteristic parameter of a target location in a working area, the first characteristic parameter being a characteristic parameter collected by the sensing assembly before cleaning the target location; the obtaining module being further used to obtain a second characteristic parameter of the target location after controlling the cleaning element to clean the target location; and
a determining module, used to determine a degree of contamination of the target location based on a difference between the first characteristic parameter and the second characteristic parameter; the determining module being further used to determine the degree of contamination of the cleaning element based on the degree of contamination of the target location.

In a third aspect, a device for determining a degree of contamination of a cleaning element is provided. The device includes a processor and a memory in which a program is stored. The program is loaded and executed by the processor to implement the method for determining the degree of contamination of the cleaning element according to the first aspect.

In a fourth aspect, a computer-readable storage medium is provided. A program is stored in the computer-readable storage medium. The program is loaded and executed by the processor to implement the method for determining the degree of contamination of the cleaning element according to the first aspect.

The beneficial effects of the present application are as follows: the present application can solve the problem of waste of cleaning resources or poor cleaning effect of cleaning device when cleaning the cleaning element based on a fixed cleaning cycle, by obtaining a first characteristic parameter of a target location in a working area collected by the sensing assembly; obtaining a second characteristic parameter of the target location collected by the sensing assembly, after the cleaning element is controlled to clean the target location; determining a degree of contamination of the target location based on a difference between the first characteristic parameter and the second characteristic parameter; and

determining the degree of contamination of the cleaning element based on the degree of contamination of the target location. Since the degree of contamination of the cleaning element can be determined, the present application can determine whether the cleaning element needs to be cleaned according to the degree of contamination, which improves the accuracy of determining the cleaning timing of the cleaning element.

The above description is only an overview of the technical solutions of the present application. In order to be able to understand the technical means of the present application more clearly and implement them in accordance with the content of the specification, preferred embodiments of the present application are described in detail below in conjunction with the accompanying drawings.

**BRIEF DESCRIPTION OF DRAWINGS**

FIG. 1 is a schematic structural view of a cleaning device provided by an embodiment of the present application;

FIG. 2 is a flowchart of a method for determining a degree of contamination of a cleaning element provided by an embodiment of the present application;

FIG. 3 is a block diagram of a device for determining a degree of contamination of a cleaning element provided by an embodiment of the present application; and

FIG. 4 is a block diagram of a device for determining a degree of contamination of a cleaning element provided by an embodiment of the present application.

**DETAILED DESCRIPTION**

The specific embodiments of the present application will be described in further detail below in conjunction with the accompanying drawings and implementations. The following embodiments are used to illustrate the present application, but are not used to limit the scope of the present application.

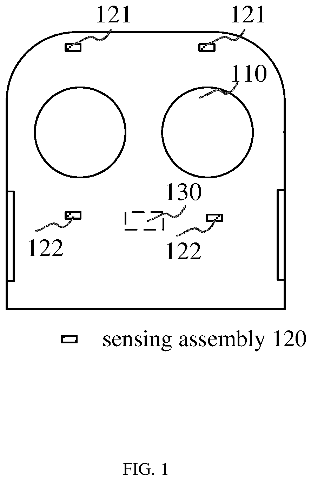

FIG. 1 is a schematic structural view of a cleaning device provided by an embodiment of the present application. The cleaning device is a device with a cleaning function and a self-moving function, such as a sweeping robot, a mopping robot, etc. This embodiment does not limit the type of the cleaning device. As shown in FIG. 1, the cleaning device at least includes: a cleaning element 110, a sensing assembly 120 and a control assembly 130.

The cleaning element 110 is used to clean a working area under the control of the cleaning device. Optionally, the cleaning element 110 may be a brush, a rag, etc. The type of the cleaning element 110 is not limited in this embodiment.

The cleaning element 110 is in communication connection with the control assembly 130, and performs cleaning work under the control of the control assembly 130.

The sensing assembly 120 is used to collect a characteristic parameter in a sensing range. The characteristic parameter is a parameter of a reflected signal of a specified signal collected after the sensing assembly 120 emits the specified signal. Optionally, the specified signal includes an optical signal. At this time, the sensing assembly 120 may be a reflective optical sensing assembly. The characteristic parameter includes a light intensity parameter of a reflected light signal collected by a reflective light sensing assembly; and/or, the specified signal includes electromagnetic waves. At this time, the sensing assembly 120 may be a radar sensor. The characteristic parameter includes the frequency of the reflected electromagnetic wave collected by the radar sensor. After different media reflect electromagnetic waves of the same frequency, the frequencies of the reflected electromagnetic waves obtained are different.

In one example, the sensing assembly 120 includes a first sensor 121 and a second sensor 122. In a traveling direction of the cleaning device, the first sensor 121 is installed at a front end of the second sensor 122. A mechanism with cleaning function provided between the first sensor 121 and the second sensor 122 only includes the cleaning element 110. The first sensor 121 is used to collect the first characteristic parameter of the target location in the working area before cleaning. The second sensor 122 is used to collect the second characteristic parameter of the target location after cleaning.

Optionally, the first sensor 121 and the second sensor 122 include multiple groups. Each group of the first sensor 121 and the second sensor 122 corresponds to one cleaning element. For example, in FIG. 1, the cleaning element on the left corresponds to a group of first sensor 121 and second sensor 122. The cleaning element on the right corresponds to another group of the first sensor 121 and the second sensor 122.

The sensing assembly 120 is in communication connection with the control assembly 130. Under the control of the control assembly 130, the sensing assembly 120 starts or stops collecting characteristic parameters, and sends the collected characteristic parameters to the control assembly 130. The control assembly 130 is used to control the work of the cleaning device, such as: to control the time when the cleaning device starts to work, to control the time when the cleaning device ends the work, and to control the cleaning of the cleaning element.

In this embodiment, the control assembly 130 is used to: obtain the first characteristic parameter of the target location in the working area collected by the sensing assembly 120, the first characteristic parameter being a characteristic parameter collected by the sensing assembly before cleaning the target location; obtaining a second characteristic parameter of the target location collected by the sensing assembly 120, after the cleaning element is controlled to clean the target location; determining a degree of contamination of the target location based on a difference between the first characteristic parameter and the second characteristic parameter; and determining the degree of contamination of the cleaning element based on the degree of contamination of the target location.

In addition, in this embodiment, the installation of the control assembly 130 on the cleaning device is taken as an example for description. In actual implementation, the control assembly 130 may also be installed in other equipment independent of the cleaning device.

In addition, the cleaning device may also include more components, such as: a moving assembly (such as wheels) used to drive the movement of the cleaning device, a drive assembly (such as motors) used to drive the movement of the moving assembly, and a power supply assembly (such as a battery pack). The present embodiment does not list the components included in the cleaning device one by one.

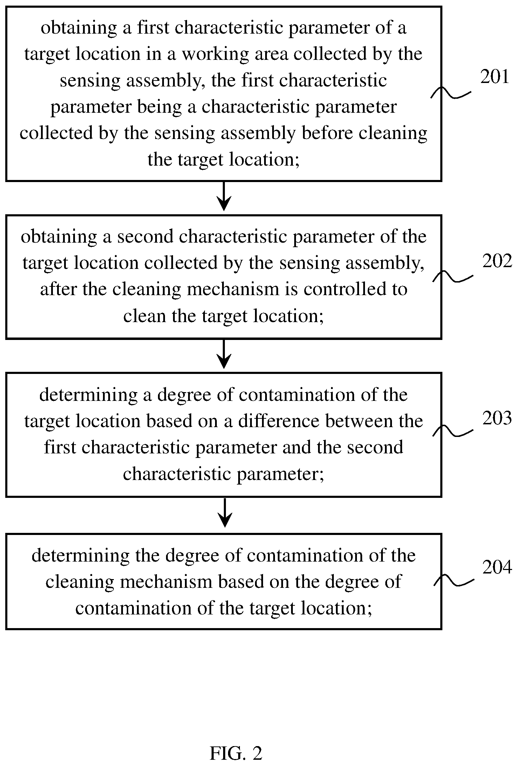

FIG. 2 is a flowchart of a method for determining a degree of contamination of a cleaning element provided by an embodiment of the present application. In this embodiment, the method is applied to the cleaning device shown in FIG. 1 and the execution subject of each step is the control assembly 130 as an example for description. The method includes at least the following steps.

Step 201: obtaining a first characteristic parameter of the target location in the working area collected by the sensing assembly. The first characteristic parameter is a characteristic parameter collected by the sensing assembly before cleaning the target location.

The working area refers to an area where the cleaning device is currently located. For example: a floor area of a room.

The target location refers to a position within the current acquisition range of the sensing assembly. As the cleaning device moves, the target location also changes.

Step 202: obtaining a second characteristic parameter of the target location collected by the sensing assembly, after the cleaning element is controlled to clean the target location

In one example, the sensing assembly includes a first sensor and a second sensor. In the traveling direction of the cleaning device, the first sensor is installed at the front end of the second sensor. The mechanism having the cleaning function provided between the first sensor and the second sensor only includes the cleaning element. The first sensor is used to collect the first characteristic parameter. The second sensor is used to collect the second characteristic parameter. At this time, obtaining the first characteristic parameter of the target location in the working area, includes: controlling the first sensor to collect the first characteristic parameter in real time. Correspondingly, obtaining the second characteristic parameter of the target location collected by the sensing assembly, after the cleaning element is controlled to clean the target location, includes: obtaining an installation distance between the first sensor and the second sensor; obtaining a moving speed of the cleaning device; determining a moving time based on the installation distance and the moving speed; and obtaining the second characteristic parameter collected by the second sensor when a time after collecting the first characteristic parameter is the moving time.

Wherein the moving time refers to, for a same target location, a predicted time of the cleaning device starting from a position vertically projected by the first sensor as the target location to a position vertically projected by the second sensor as the target location.

In another example, for each first characteristic parameter obtained by the sensing assembly, the cleaning device obtains the current position and establishes the corresponding relationship between the current position and the first characteristic parameter; and when the cleaning device moves to the current position again, the second characteristic parameter of the current position is collected by the sensing assembly.

Of course, the cleaning device may also collect the first characteristic parameter and the second characteristic parameter in other ways, and the present embodiment does not limit the method of collecting the first characteristic parameter and the second characteristic parameter.

Step 203: determining the degree of contamination of the target location based on the difference between the first characteristic parameter and the second characteristic parameter.

The difference between the first characteristic parameter and the second characteristic parameter is input into a preset formula so as to obtain the degree of contamination of the target location.

Schematically, based on the difference between the first characteristic parameter and the second characteristic parameter, the degree of contamination of the determined target location is expressed by the following formula:

$$g(x) = f(\text{sensor1\_1} - \text{sensor1\_2}) + f(\text{sensor2\_1} - \text{sensor2\_2})$$

Where sensor1_1 is the first characteristic parameter collected by the first sensor in the first group; sensor1_2 is the second characteristic parameter collected by the second sensor in the first group; sensor2_1 is the first characteristic parameter collected by the first sensor in the second group; sensor2_2 is the second characteristic parameter collected by the second sensor in the second group; f(x) represents the degree of contamination of the positions corresponding to each group of the first sensor and the second sensor; and g(x) is the degree of contamination of the target location.

Step 204: determining the degree of contamination of the cleaning element based on the degree of contamination of the target location.

The degrees of contamination of the target location determined at each working time within a preset time period are accumulated to obtain the degree of contamination of the cleaning element. Optionally, the target locations corresponding to different working moments are different.

Optionally, the preset time period may be the moving time; or, the working time of the cleaning device in the cleaning state.

Schematically, the determination of the degree of contamination of the cleaning element based on the degree of contamination of the target location is expressed by the following formula:

$$F(x) = \int ag(x)dt$$

where g(x) is the degree of contamination of the target location; a represents a preset coefficient; F(x) is the degree of contamination of the cleaning element.

Optionally, after step 204, a first cleaning working mode is activated when the degree of contamination of the cleaning element reaches a contamination threshold to clean the cleaning element.

In an example, the first cleaning working mode includes: moving to the cleaning position, and starting the cleaning element at the cleaning position to clean the cleaning element; or outputting a cleaning prompt to prompt the user to clean the cleaning element.

The cleaning element includes: a water tank, a water pump, a nozzle and a squeezing device. The water tank is used to store water. The water pump is used to pump the water out of the water tank to spray from the nozzle to the cleaning element. The squeezing device is used to squeeze the cleaning element to wring out the cleaning element. Of course, the cleaning element may also be of other types, for example, including a water circulation structure, etc. The type of the cleaning element is not limited in this embodiment.

The cleaning prompt includes but is not limited to: a voice prompt, a light prompt, an image prompt, and a prompt sent to a mobile terminal, etc. The present embodiment does not limit the types of cleaning prompt.

For example, when the cleaning device has the function of automatically cleaning the cleaning element, the first cleaning working mode is to start the cleaning element to clean the cleaning element. When the cleaning device does not have the function of automatically cleaning the cleaning element, the first cleaning working mode is to output a cleaning prompt.

Optionally, after step 204, when the current working time length reaches a preset working time length, a second cleaning working mode is activated according to the degree of contamination to clean the cleaning element.

Wherein, the preset working time may be half an hour, an hour, etc., and this embodiment does not limit the value of the preset working time.

In one example, starting the second cleaning work mode according to the degree of contamination, includes: determining the cleaning time according to the degree of contamination; moving to the cleaning position; and starting the cleaning element at the cleaning position to clean the cleaning element; wherein there is a positive correlation between the cleaning time and the degree of contamination.

In another example, the output mode of the cleaning prompt is determined according to the degree of contamination; and the cleaning prompt is output according to the output mode to prompt the user to clean the cleaning element.

For example: when the degree of contamination is within a first contamination range, the output mode is a voice prompt of the first volume; when the degree of contamination is within a second contamination range, the output mode is a sound prompt of the second volume plus a light prompt. Wherein, the second contamination range is larger than the first contamination range, and the second volume is greater than the first volume. Of course, the output modes corresponding to different degrees of contamination can also be set in other ways, and this embodiment does not limit the setting modes of the output modes corresponding to different levels of contamination.

In summary, the method for determining the degree of contamination of the cleaning element provided in this embodiment can solve the problem of waste of cleaning resources or poor cleaning effect of cleaning device when cleaning the cleaning element based on a fixed cleaning cycle, by obtaining a first characteristic parameter of a target location in a working area collected by the sensing assembly; obtaining a second characteristic parameter of the target location collected by the sensing assembly, after the cleaning element is controlled to clean the target location; determining a degree of contamination of the target location based on a difference between the first characteristic parameter and the second characteristic parameter; and determining the degree of contamination of the cleaning element based on the degree of contamination of the target location. Since the degree of contamination of the cleaning element can be determined, the present application can determine whether the cleaning element needs to be cleaned according to the degree of contamination, which improves the accuracy of determining the cleaning timing of the cleaning element.

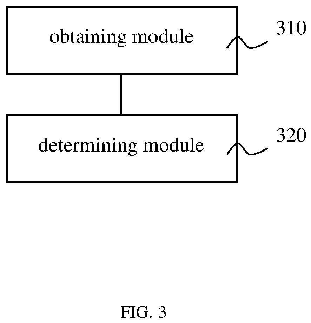

FIG. 3 is a block diagram of a device for determining the degree of contamination of a cleaning element provided by an embodiment of the present application. In this embodiment, the device is applied to the cleaning device shown in FIG. 1 as an example for description. The device includes at least the following modules: an obtaining module 310 and a determining module 320.

The obtaining module 310 is used to obtain a first characteristic parameter of a target location in a working area. The first characteristic parameter is a characteristic parameter collected by the sensing assembly before cleaning the target location.

The obtaining module 310 is further used to obtain a second characteristic parameter of the target location after controlling the cleaning element to clean the target location.

The determining module 320 is used to determine a degree of contamination of the target location based on a difference between the first characteristic parameter and the second characteristic parameter.

The determining module 320 is further used to determine the degree of contamination of the cleaning element based on the degree of contamination of the target location.

For related details, refer to the above method embodiment.

It should be noted that, when the device for determining the degree of contamination of the cleaning element provided in the foregoing embodiment determines the degree of contamination of the cleaning element, only the division of the above-mentioned functional modules is used for illustration. In practical applications, the above-mentioned functions can be allocated by different functional modules as required. That is, the internal structure of the device for determining the degree of contamination of the cleaning element is divided into different functional modules to complete all or part of the functions described above. In addition, the device for determining the degree of contamination of the cleaning element provided by the above-mentioned embodiment belongs to the same concept as the embodiment of the method for determining the degree of contamination of the cleaning element. For the specific implementation process, please refer to the method embodiment, which will not be repeated here.

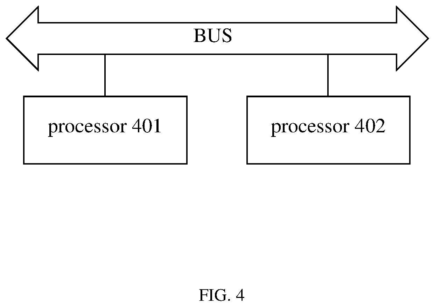

FIG. 4 is a block diagram of a device for determining the degree of contamination of a cleaning element provided by an embodiment of the present application. The device may be the cleaning device shown in FIG. 1. The device at least includes a processor 401 and a memory 402.

The processor 401 may include one or more processing cores, such as a 4-core processor, an 8-core processor, and so on. The processor 401 may be implemented in at least one hardware form among DSP (Digital Signal Processing), FPGA (Field-Programmable Gate Array), and PLA (Programmable Logic Array). The processor 401 may also include a main processor and a co-processor. The main processor is a processor used to process data in the awake state, and is also called a CPU (Central Processing Unit). The co-processor is a low-power processor used to process data in the standby state. In some embodiments, the processor 401 may be integrated with a GPU (Graphics Processing Unit). The GPU is used to render and draw the content that needs to be displayed on the display screen. In some embodiments, the processor 401 may further include an AI (Artificial Intelligence) processor. The AI processor is used to process computing operations related to machine learning.

The memory 402 may include one or more computer-readable storage medium. The computer-readable storage medium may be non-transitory. The memory 402 may also include high-speed random access memory and non-volatile memory, such as one or more magnetic disk storage devices and flash memory storage devices. In some embodiments, the non-transitory computer-readable storage medium in the memory 402 is used to store at least one instruction. The at least one instruction is used to be executed by the processor 401 to implement the method for determining the degree of contamination of the cleaning element provided in the method embodiment of the present application.

In some embodiments, the device for determining the degree of contamination of the cleaning element may optionally further include: a peripheral device port and at least one peripheral device. The processor 401, the memory 402, and the peripheral device port may be communicated by a BUS or a signal line. Each peripheral device can be communicated to the peripheral device port through the BUS, the signal line or a circuit board. Schematically, peripheral devices include, but are not limited to: radio frequency circuits, audio circuits, and power supplies.

Of course, the device for determining the degree of contamination of the cleaning element may also include fewer or more components, which is not limited in this embodiment.

Optionally, the present application also provides a computer-readable storage medium. The computer-readable storage medium stores a program. The program is loaded and executed by a processor to implement the method for determining the degree of contamination of the cleaning element in the foregoing method embodiment.

Optionally, the present application also provides a computer product. The computer product includes a computer-readable storage medium. The computer-readable storage medium stores a program. The program is loaded and executed by the processor to implement the method for determining the degree of contamination of the cleaning element in the foregoing method embodiment.

The technical features of the above-mentioned embodiments can be combined arbitrarily. In order to make the description concise, all possible combinations of the various technical features in the foregoing embodiments are not described. However, as long as there is no contradiction in the combination of these technical features, it should be regarded as the scope described in this specification.

The above-mentioned embodiments only express several embodiments of the present application, and the description is relatively specific and detailed, but it should not be understood as a limitation on the scope of the present application. It should be noted that for those of ordinary skill in the art, without departing from the concept of the present application, several modifications and improvements can be made, and these all fall within the protection scope of the present application. Therefore, the protection scope of the disclosed patent should be subject to the appended claims.

**Claims**

1. A method for determining a degree of contamination of a cleaning element, the method being used in a cleaning device, the cleaning device comprising the cleaning element and a sensing assembly, the sensing assembly being used to collect a characteristic parameter in a sensing range, the characteristic parameter being a parameter of a reflection signal of a specified signal collected after the sensing assembly emits the specified signal, the method comprising steps of:

   obtaining a first characteristic parameter of a target location in a working area collected by the sensing assembly, the first characteristic parameter being a characteristic parameter collected by the sensing assembly before cleaning the target location;
   obtaining a second characteristic parameter of the target location collected by the sensing assembly, after the cleaning element is controlled to clean the target location;
   determining a degree of contamination of the target location based on a difference between the first characteristic parameter and the second characteristic parameter; and
   determining the degree of contamination of the cleaning element based on the degree of contamination of the target location.

2. The method according to claim 1, wherein the sensing assembly comprises a reflective light sensing assembly, and the characteristic parameter comprises a light intensity parameter of a reflected light signal collected by the reflective light sensing assembly.

3. The method according to claim 1, wherein determining the degree of contamination of the cleaning element based on the degree of contamination of the target location, comprises:
   accumulating degrees of contamination of the target location determined at each working time within a preset time period, so as to obtain the degree of contamination of the cleaning element.

4. The method according to claim 1, wherein determining the degree of contamination of the cleaning element based on the degree of contamination of the target location is expressed by a following formula:

$$F(\mathrm{x}) = \int a\mathrm{g}(x)dt$$,

   where g(x) is the degree of contamination of the target location; a represents a preset coefficient; and F(x) is the degree of contamination of the cleaning element.

5. The method according to any one of claims 1 to 4, wherein after determining the degree of contamination of the cleaning element based on the degree of contamination of the target location, the method further comprises:
   when the degree of contamination of the cleaning element reaches a contamination threshold, a first cleaning working mode is activated to clean the cleaning element.

6. The method according to claim 5, wherein the first cleaning working mode comprises:

moving to a cleaning position and starting the cleaning element at the cleaning position to clean the cleaning element; or

outputting a cleaning prompt to an user to prompt the user to clean the cleaning element.

7. The method according to any one of claims 11 to 4, wherein after determining the degree of contamination of the cleaning element based on the degree of contamination of the target location, the method further comprises: activating a second cleaning working mode according to the degree of contamination to clean the cleaning element, when a current working time reaches a preset working time.

8. The method according to claim 7, wherein activating the second cleaning working mode according to the degree of contamination, comprises:

   determining a cleaning time according to the degree of contamination;
   moving to a cleaning position; and
   starting the cleaning element at the cleaning position to clean the cleaning element; and wherein the cleaning time is in a positive correlation with the degree of contamination;
   or,
   determining an output mode of a cleaning prompt according to the degree of contamination; and
   outputting the cleaning prompt according to the output mode so as to prompt a user to clean the cleaning element.

9. The method according to any one of claims 11 to 4, wherein the sensing assembly comprises a first sensor and a second sensor; in a traveling direction of the cleaning device, the first sensor is installed at a front end of the second sensor; a mechanism with a cleaning function provided between the first sensor and the second sensor only comprises the cleaning element; and
   wherein the first sensor is used to collect the first characteristic parameter, and the second sensor is used to collect the second characteristic parameter.

10. The method according to claim 9, wherein obtaining the second characteristic parameter of the target location collected by the sensing assembly, after the cleaning element is controlled to clean the target location, comprises:

    obtaining an installation distance between the first sensor and the second sensor;
    obtaining a moving speed of the cleaning device;
    determining a moving time based on the installation distance and the moving speed, the moving time referring to, for a same target location, a predicted time of the cleaning device starting from a position vertically projected by the first sensor as the target location to a position vertically projected by the second sensor as the target location; and
    obtaining the second characteristic parameter collected by the second sensor when a time after collecting the first characteristic parameter is the moving time.

11. A device for determining a degree of contamination of a cleaning element, the device being used in a cleaning device, the cleaning device comprising the cleaning element and a sensing assembly, the sensing assembly being used to collect characteristic a parameter in a sensing range, the characteristic parameter being a parameter of a reflection signal of a specified signal collected after the sensing assembly emits the specified signal, the device comprising:

    an obtaining module, used to obtain a first characteristic parameter of a target location in a working area, the first characteristic parameter being a characteristic parameter collected by the sensing assembly before cleaning the target location; the obtaining module being further used to obtain a second characteristic parameter of the target location after controlling the cleaning element to clean the target location; and
    a determining module, used to determine a degree of contamination of the target location based on a difference between the first characteristic parameter and the second characteristic parameter; the determining module being further used to determine the degree of contamination of the cleaning element based on the degree of contamination of the target location.

12. A device for determining a degree of contamination of a cleaning element, the device comprising a processor and a memory in which a program is stored, the program being loaded and executed by the processor to implement the method for determining the degree of contamination of the cleaning element according to any one of claims 1 to 10.

13. A computer-readable storage medium, comprising a program; wherein when the program is executed by a processor, the program is used to implement the method for determining the degree of contamination of the cleaning element according to any one of claims 1 to 10.

121          121

110

130

122          122

▭   sensing assembly 120

FIG. 1

obtaining a first characteristic parameter of a target location in a working area collected by the sensing assembly, the first characteristic parameter being a characteristic parameter collected by the sensing assembly before cleaning the target location;

201

obtaining a second characteristic parameter of the target location collected by the sensing assembly, after the cleaning mechanism is controlled to clean the target location;

202

determining a degree of contamination of the target location based on a difference between the first characteristic parameter and the second characteristic parameter;

203

determining the degree of contamination of the cleaning mechanism based on the degree of contamination of the target location;

204

FIG. 2

obtaining module — 310

determining module — 320

FIG. 3

BUS

processor 401

processor 402

FIG. 4

## INTERNATIONAL SEARCH REPORT

| International application No. |
|---|
| **PCT/CN2021/099637** |

| A. | CLASSIFICATION OF SUBJECT MATTER |
|---|---|
| | A47L 11/24(2006.01)i; A47L 11/28(2006.01)i; A47L 11/40(2006.01)i |

According to International Patent Classification (IPC) or to both national classification and IPC

| B. | FIELDS SEARCHED |
|---|---|

Minimum documentation searched (classification system followed by classification symbols)

A47L

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT: 清洁, 布, 刷, 辊, 前, 后, 脏污, 污染, 比较, 传感器, 反射, clean, mop, brush, roller, before, after, pollution, contamination, compare, sens+, detect+, reflect

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 111789538 A (ZHUICHUANG TECHNOLOGY (SUZHOU) CO., LTD.) 20 October 2020 (2020-10-20)<br>claims 1-12, description paragraphs [0047]-[0098] | 1-13 |
| Y | CN 110236455 A (YUNJING INTELLIGENT TECHNOLOGY (DONGGUAN) CO., LTD.) 17 September 2019 (2019-09-17)<br>claims 1-9, description paragraphs [0146]-[0170], [0184]-[0221], [0235]-[0254], figures 1-17 | 1-13 |
| Y | CN 108287543 A (VORWERK & CO. INTERHOLDING GMBH) 17 July 2018 (2018-07-17)<br>description paragraphs [0010], [0015], [0016] | 1-13 |
| A | CN 103599907 A (SHAO, Junsong et al.) 26 February 2014 (2014-02-26)<br>entire document | 1-13 |
| A | JP 2010017428 A (NISHI NIHON KOSOKU DORO MAINTENANCE KANSAI K. K. et al.) 28 January 2010 (2010-01-28)<br>entire document | 1-13 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 July 2021** | **16 August 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/099637**

| Patent document cited in search report | | | Publication date (day/month/year) | Patent family member(s) | | | Publication date (day/month/year) |
|---|---|---|---|---|---|---|---|
| CN | 111789538 | A | 20 October 2020 | None | | | |
| CN | 110236455 | A | 17 September 2019 | WO | 2020143291 | A1 | 16 July 2020 |
| | | | | HK | 40006558 | A0 | 22 May 2020 |
| CN | 108287543 | A | 17 July 2018 | EP | 3345524 | A1 | 11 July 2018 |
| | | | | JP | 2018110854 | A | 19 July 2018 |
| | | | | TW | 201831134 | A | 01 September 2018 |
| | | | | EP | 3345524 | B1 | 03 March 2021 |
| | | | | DE | 102017100366 | A1 | 12 July 2018 |
| CN | 103599907 | A | 26 February 2014 | CN | 103599907 | B | 30 March 2016 |
| JP | 2010017428 | A | 28 January 2010 | None | | | |

Form PCT/ISA/210 (patent family annex) (January 2015)